# EUROPÄISCHE PATENTANMELDUNG

(11) **EP 4 119 794 A1**
(43) Veröffentlichungstag der Anmeldung: **18.01.2023**
(21) Anmeldenummer: 21185936.8
(22) Anmeldetag: 15.07.2021
(51) Int. Cl.: F03G 7/00

(54) **UMWELTFREUNDLICHER SCHIFFSANTRIEB**

(71) Anmelder: Hostettler, Jonas Peter, 4950 Huttwil (CH)
(72) Erfinder: Hostettler, Jonas Peter, 4950 Huttwil (CH); Bakkers, Gabriel, 4800 Zofingen (CH); Al Khabbaz, Abdul Rahman, 4923 Wynau (CH); Hostettler, Jürg André, 4950 Huttwil (CH)
(74) Vertreter: Kieffer, Valentin

(57) **Zusammenfassung**

Die Erfindung betrifft einen umweltfreundlichen Schiffsantrieb und ein entsprechendes Verfahren zum Antrieb eines Schiffes. Der umweltfreundliche Schiffsantrieb umfasst eine Osmosekammer (1), eine Druckentlastungseinheit (2) und eine Entsalzungseinheit, wobei die Osmosekammer (1) einen Hochsalinitätsbereich (11) und einen Tiefsalinitätsbereich (12) umfasst, die durch eine osmotische Membran (13) voneinander getrennt sind. Die Druckentlastungseinheit (2) weist mindestens einen Druck-Bewegungsumwandler auf, welcher über eine Hochdruckleitung (21) mit dem Hochsalinitätsbereich (11) der Osmosekammer (1) verbunden ist. Die Entsalzungseinheit ist zur Erzeugung von einerseits Salz oder zumindest Hochsalinitätswasser und andererseits von Frischwasser oder zumindest Tiefsalinitätswasser geeignet. Eine Frischwasserleitung verbindet die Entsalzungseinheit mit dem Tiefsalinitätsbereich (12) der Osmosekammer (1) und eine Salzwasserzufuhr (14) ist mit dem Hochsalinitätsbereich (11) der Osmosekammer (1) steuerbar verbunden.

## Beschreibung

Die vorliegende Erfindung betrifft einen umweltfreundlichen Schiffsantrieb gemäss Patentanspruch 1 und ein entsprechendes Verfahren zum Antrieb eines Schiffes gemäss Patentanspruch 8.

Schiffsantriebe bestehen traditionellerweise aus grossen Motoren, die meist mit fossilen Brennstoffen angetrieben werden. Im Rahmen der Bestrebungen, den CO2 Ausstoss zu verringern, wird heute vermehrt auf umweltfreundliche und nachhaltigere Energiequellen gesetzt. So gibt es einige Ansätze, Wind- oder Solarenergie einzusetzen, um den Antrieb von Schiffen zu gewährleisten oder zu unterstützen.

Die vorliegende Erfindung stellt sich nunmehr die Aufgabe, einen umweltfreundlichen Schiffsantrieb bereitzustellen, welcher die Energie zum Antrieb des Schiffes aus einer alternativen nachhaltigen Quelle gewinnt.

Diese Aufgabe löst ein umweltfreundlicher Schiffsantrieb mit den Merkmalen des Patentanspruches 1 und ein entsprechendes Verfahren zum Antrieb eines Schiffes mit den Merkmalen des Patentanspruchs 8. Weitere Merkmale und Ausführungsbeispiele gehen aus den abhängigen Ansprüchen hervor und deren Vorteile sind in der nachfolgenden Beschreibung erläutert.

Die Zeichnungen zeigen:
- Figur 1a: Osmosekammer
- Figur 1b: Osmotische Membran mit Keramik
- Figur 2a: Ausführungsvariante der Osmosekammer
- Figur 2b: Ausführungsvariante der osmotischen Membran mit Keramik
- Figur 3a-b: Ausführungsvarianten der Druckentlastungseinheit
- Figur 4a: Verdampfungskammer
- Figur 4b: Vernebelungsdüse
- Figur 5: Übersicht der Funktionsweise einer Ausführungsvariante des Schiffsantriebs

Die Figuren stellen mögliche Ausführungsbeispiele dar, welche in der nachfolgenden Beschreibung erläutert werden.

Grundlage der Erfindung ist ein Schiffsantrieb, welcher Energie aus der Osmose zwischen Salzwasser und Frischwasser gewinnt. Frachtschiffen und Tankern, die auf dem Meer verkehren, stehen unbegrenzte Mengen an Wasser und Salz zur Verfügung, die zum umweltfreundlichen Antrieb des Schiffes ausgenutzt werden können.

In der einfachsten Ausführungsvariante der Erfindung umfasst der Schiffsantrieb eine Osmosekammer 1, eine Druckentlastungseinheit 2 und eine Entsalzungseinheit.

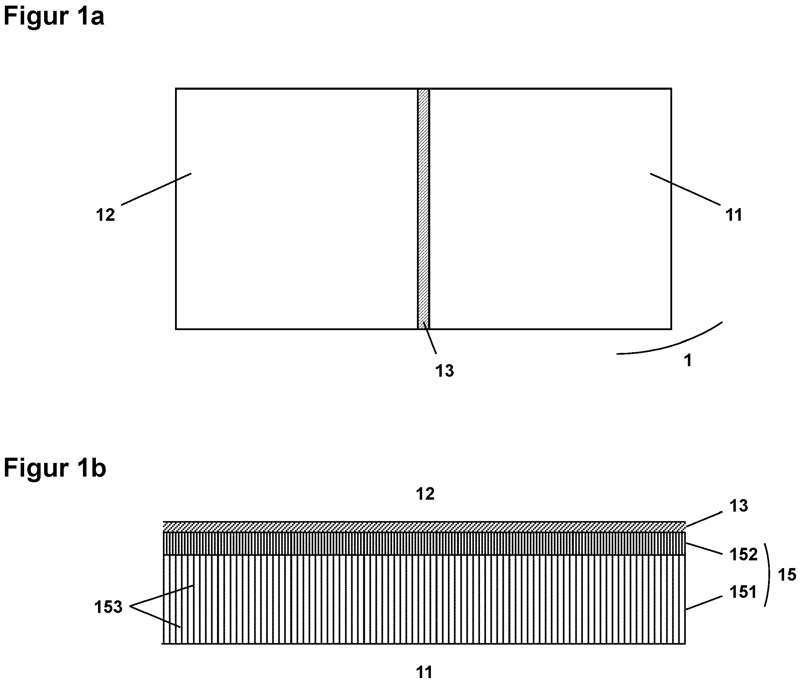

Die Osmosekammer 1 umfasst einen Hochsalinitätsbereich 11 und einen Tiefsalinitätsbereich 12, die durch eine osmotische Membran 13 voneinander getrennt sind (Figur 1a). Der Hochsalinitätsbereich 11 und der Tiefsalinitätsbereich 12 sind zur Aufnahme von Flüssigkeiten geeignet, insbesondere Wasser, deren Salinität im Hochsalinitätsbereich 11 höher ist als im Tiefsalinitätsbereich 12. Die osmotische Membran 13 besteht vorzugsweise aus Kunststoff und weist Poren auf, die den Durchgang von Wasser zwischen dem Hochsalinitätsbereich 11 und dem Tiefsalinitätsbereich 12 erlauben, aber nicht den Durchgang von im Wasser gelösten Salzionen. Aufgrund der unterschiedlichen Salinität im Hochsalinitätsbereich 11 und im Tiefsalinitätsbereich 12 entsteht gemäss dem Osmoseprinzip durch die osmotische Membran 13 ein spontaner Fluss von Wasser vom Tiefsalinitätsbereich 12 zum Hochsalinitätsbereich 11. Dieser Vorgang kann zu einem Überdruck im Hochsalinitätsbereich 11 von bis zu 500 bar führen, welcher zum Antrieb des Schiffes ausgenutzt wird.

In der bevorzugten Ausführungsvariante der Erfindung ist die osmotische Membran 13 auf der Seite des Tiefsalinitätsbereichs 12 mit einer porösen Keramik 15 versehen (Figur 1b). Von Vorteil ist es, wenn die osmotische Membran 13 als Beschichtung der porösen Keramik 15 ausgebildet ist. Die poröse Keramik erfüllt zwei wesentlichen Funktionen. Erstens hält die Keramik 15 aufgrund ihrer Steifheit und mechanischen Festigkeit den hohen, im Hochsalinitätsbereich 11 herrschenden Druck stand und dient als tragende Struktur für die osmotische Membran 13. Zweitens fördert die Keramik 15 den Durchgang von Wasser vom Tiefsalinitätsbereich 12 zum Hochsalinitätsbereich 11. Dafür weist sie durchgehende Kapillarkanäle 153 auf, in welche Wasser aufgrund der Kapillarkräfte und der Van-der-Waals-Kräfte eindringt und vom Tiefsalinitätsbereich 12 bis zur osmotischen Membran 13 befördert wird. Dadurch entsteht eine Sogwirkung des Wassers an der dem Tiefsalinitätsbereich 12 zugewandten Oberfläche der Keramik 15 und einen erhöhten Wasserdruck an der Schnittstelle zwischen der Keramik 15 und der osmotischen Membran 13, die den Übergang des Wassers in den Hochsalinitätsbereich 11 begünstigen. Die Porosität der Keramik 15 kann über die Dicke der Keramikschicht 15 einheitlich sein, mit einfachen Kapillarkanälen 153, die beiderseits der Keramikschicht 15 münden, oder variieren, beispielsweise indem jeder Kapillarkanal von der dem Tiefsalinitätsbereich 12 zugewandten Seite der Keramikschicht 15 zur Schnittstelle zur osmotischen Membran 13 ein- oder mehrfach verzweigt ist. Verzweigte Kapillarkanäle 153 erhöhen die Kapillarkräfte und den an der Schnittstelle zur osmotischen Membran 13 herrschenden Wasserdruck und fördern somit den Übergang des Wassers zum Hochsalinitätsbereich 11. Die Keramikschicht 153 könnte somit einen ersten Bereich 151 aufweisen mit einer niedrigeren Dichte der Kapillarkanäle 153 und einen zweiten Bereich 152 mit einer höheren Dichte der Kapillarkanäle 153. Geeignete keramische Werkstoffe sind z.B. Zirkonoxid, Iridiumoxid oder eine Mischung von beiden und haben gegenüber Metallen den Vorteil, dass sie korrosionsbeständig sind.

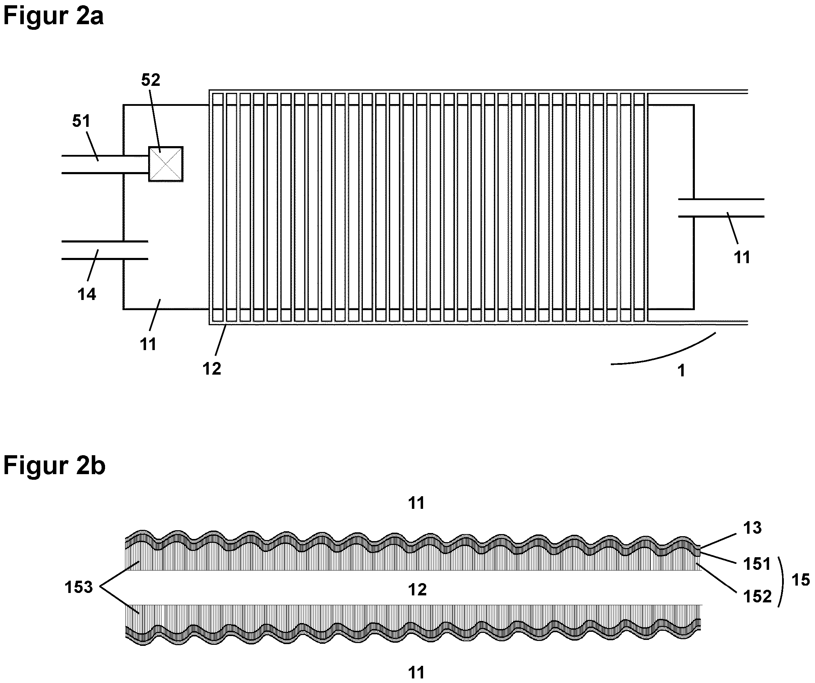

Bevorzugt ist es, wenn die Keramik 15 in Form von Röhren vorliegt, welche mit der osmotischen Membran beschichtet sind, und die Osmosekammer 1 in Form eines Tanks vorliegt, den die Keramikröhren durchlaufen (Figuren 2ab). In dieser Variante bildet der Tank den Hochsalinitätsbereich 11 und das innere Volumen der Keramikröhren bildet den Tiefsalinitätsbereich 12. Zur Erhöhung des Volumenstroms durch die osmotische Membran 13 und daher der Leistung der Osmosekammer 1 kann die Fläche der osmotischen Membran 13 und/oder der Keramik 15, d.h. die Kontaktfläche zwischen dem Hochsalinitätsbereich 11 und dem Tiefsalinitätsbereich 12, vergrössert werden. In vorteilhaften Ausführungsvarianten der Erfindung weist die osmotische Membran 13 und/oder die Keramik 15 eine Geometrie, die ihre Oberfläche in einem gegebenen Volumen maximiert. In einer möglichen Ausführungsvariante sind die osmotische Membran 13 und die Keramik 15 nicht eben, sondern weisen eine Vielzahl von Erhöhungen und Vertiefungen auf, beispielsweise können die Keramikröhre 15 eine gewellte Aussenfläche aufweisen (Figur 2b).

Die Druckentlastungseinheit 2 ist zur Umwandlung des im Hochsalinitätsbereich 11 herrschenden Überdrucks in mechanische Energie zum Antrieb des Schiffs geeignet, zum Beispiel mit einer Schiffsschraube, und weist dafür mindestens einen Druck-Bewegungsumwandler auf, beispielsweise einen Kolben. Eine Hochdruckleitung 21 führt unter Druck stehendes Wasser aus dem Hochsalinitätsbereich 11 der Osmosekammer 1 zum Druck-Bewegungsumwandler der Druckentlastungseinheit 2. Nach dem Durchgang durch die Druckentlastungseinheit 2 wird das verbrauchte Wasser über eine Salzwasserzuleitung 31 vollständig oder teilweise zur Entsalzungseinheit geführt. Das übrige, nicht zur Entsalzungseinheit geführte Wasser kann durch einen Ablauf 22 in die Umgebung abgegeben werden. Dies stellt kein Umweltverschmutzungsproblem dar, da es sich lediglich um Salzwasser ohne Zusätze oder chemische Schadstoffe handelt.

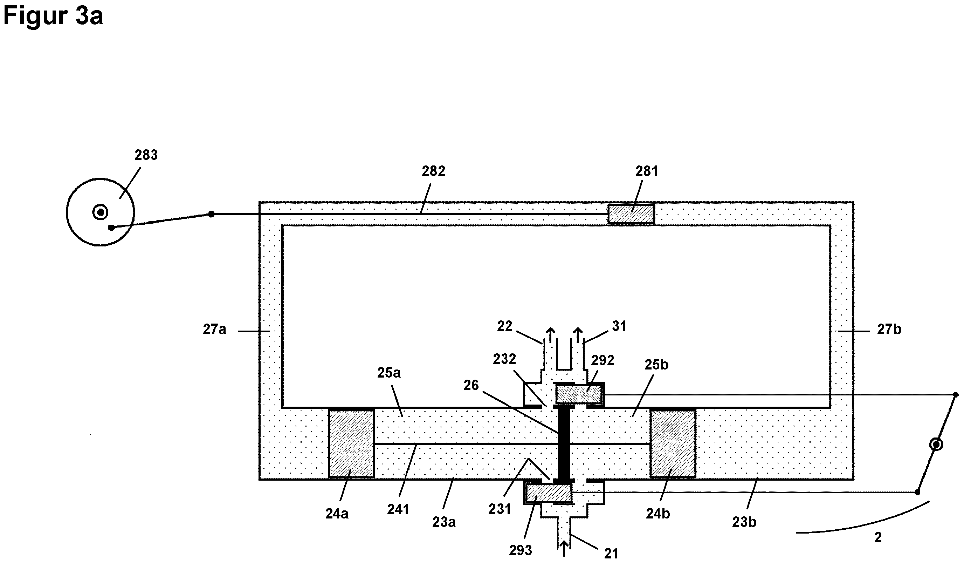

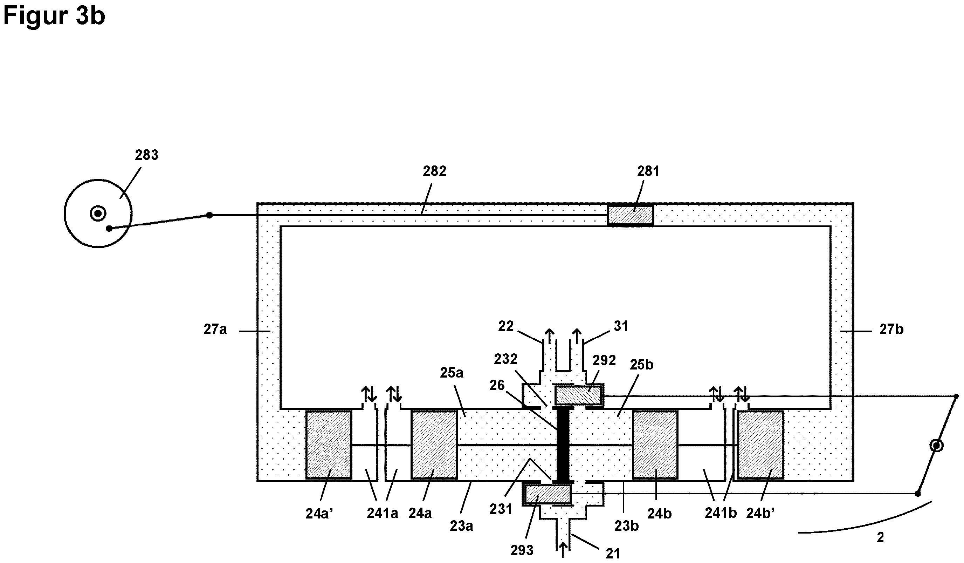

In einer möglichen Ausführungsvariante weist die Druckentlastungseinheit 2 zwei Zylinder 23a, 23b mit jeweils einem ersten Kolben 24a, 24b auf, die entlang der gleichen Längsachse angeordnet sind (Figur 3a). Die zwei ersten Kolben 24a, 24b sind derart miteinander verbunden, beispielsweise durch eine oder mehrere Stangen 241, dass sie sich zusammen bewegen und immer den gleichen Abstand aufweisen. Der dem anderen Zylinder 23a, 23b zugewandte Bereich jedes Zylinders bildet eine Vorderkammer 25a, 25b, die durch den ersten Kolben 24a, 24b, die lateralen Wände des Zylinders 23a, 23b und eine unverrückbare Stirnwand 26 des Zylinders 23a, 23b begrenzt ist. Das innere Volumen jeder Vorderkammer 25a, 25b nimmt ab, wenn der erste Kolben 24a, 24b auf die Stirnwand 26 des Zylinders 23a, 23b zu bewegt wird, und nimmt zu, wenn der erste Kolben 24a, 24b von der Stirnwand 26 des Zylinders 23a, 23b weg bewegt wird. Auf der anderen Seite jedes Zylinders 23a, 23b befindet sich eine Hinterkammer 27a, 27b, die eine Flüssigkeit enthält, beispielsweise Wasser oder Öl. Jede Hinterkammer 27a, 27b wird durch den ersten Kolben 24a, 24b, laterale Wände und eine Stirnfläche eines zweiten Kolbens 281 begrenzt. Es ist ein einziger zweiter Kolben 281 für beide Hinterkammern 27a, 27b vorgesehen, wobei eine Stirnfläche des zweiten Kolbens 281 der ersten Vorderkammer 27a zugewandt ist und die gegenüberliegende Stirnfläche des zweiten Kolbens 281 der zweiten Vorderkammer 27a zugewandt ist. Das innere Volumen jeder Hinterkammer 27a, 27b zwischen jedem ersten Kolben 24a, 24b und dem zweiten Kolben 281 ist konstant, so dass eine Bewegung der ersten Kolben 24a, 24b an einem Ende der zwei Hinterkammern 27a, 27b eine entsprechende Bewegung des zweiten Kolbens 281 am anderen Ende der Hinterkammern 27a, 27b bewirkt. Dieser zweite Kolben 281 ist durch eine Pleuelstange 282 mit einer Kurbelwelle 283 verbunden, die zum Antrieb des Schiffs dient. Die Hinterkammern 27a, 27b sind vorzugsweise räumlich getrennt von den Vorderkammern 25a, 25b, beispielsweise indem jeder Kolben 24a, 24b aus zwei Kolbenteilen 24a, 24a', respektive 24b, 24b' besteht, die durch eine oder mehrere Stangen miteinander verbunden sind (Figur 3b) . Dies ist vor allem bei der Verwendung von Hydrauliköl von Vorteil, damit ein Kriechen der Flüssigkeiten kontrolliert werden kann (d.h. eine Vermischung des Hydrauliköls mit dem Salzwasser wird vermieden). Zwischen den zwei Kolbenteilen 24a, 24a', respektive 24b, 24b' befinden sich räumlich getrennte Zwischenkammern 241a, 241b in und aus welchen Fluide, beispielsweise Luft, frei fliessen können, um die Bewegung der Kolbenteile 24a, 24a', respektive 24b, 24b' nicht zu beeinträchtigen.

Jede Vorderkammer weist mindestens einen Einlass 231 und einen Auslass 232 auf, wobei die Einlässe 231 mit der Hochdruckleitung 21 und die Auslässe 232 mit der Salzwasserzuleitung 31 und optional mit dem Ablauf 22 verbunden sind. Das unter Druck stehende Wasser der Hochdruckleitung 21 wird durch eine Einlasssteuerung entweder in die Vorderkammer 25a des einten oder in die Vorderkammer 25b des anderen Zylinders 23a, 23b geleitet, indem der Einlass 231 des einten bzw. des anderen Zylinders 23a, 23b geöffnet bzw. dicht geschlossen wird. Dies kann beispielsweise durch ein Einlassventil 293 erreicht werden, das zwischen zwei Positionen beweglich ist: eine erste Position, in welcher der Einlass 231 des einten Zylinders 23a dicht geschlossen und der Einlass 231 des anderen Zylinders 23b offen ist, und eine zweite Position, in welcher der Einlass 231 des einten Zylinders 23a offen ist und er Einlass 231 des anderen Zylinders 23b dicht geschlossen ist. Das gleiche gilt für die Auslässe 232, wobei eine Auslasssteuerung den Austritt von Wasser entweder aus der einten oder aus der anderen Vorderkammer 25a, 25b erlaubt, indem der Auslass 232 des einten bzw. des anderen Zylinders 23a, 23b geöffnet bzw. dicht geschlossen wird. Dies kann beispielsweise durch ein Auslassventil 292 erreicht werden, das ähnlich funktioniert wie das Einlassventil 293. Wichtig ist, dass der Auslass 232 einer Vorderkammer 25a, 25b immer dicht geschlossen ist, wenn der Einlass 231 der gleichen Vorderkammer 25a, 25b geöffnet wird. Dann fliesst das unter Druck stehende Wasser der Hochdruckleitung 21 in diese Vorderkammer 25a, 25b und drückt den entsprechenden ersten Kolben 24a, 24b von der Stirnwand 26 des Zylinders 23a, 23b weg. Diese Bewegung des ersten Kolbens 24a, 24b wird durch die sich in der Hinterkammer 27a, 27b befindende Flüssigkeit dem zweiten Kolben 281 und anschliessend an die Pleuelstange 282 übertragen. Da beide ersten Kolben 24a, 24b miteinander verbunden sind, wird der erste Kolben 24a, 24b des anderen Zylinders 23a, 23b gleichzeitig auf die Stirnwand 26 des Zylinders zu bewegt, und das sich in der entsprechenden Vorderkammer 25a, 25b befindende Wasser wird durch die Salzwasserleitung 31 und optional auch durch den Ablauf 22 davon heraus getrieben. So wird jede Vorderkammer 25a, 25b geleert, bevor sie im nächsten Zyklus mit dem unter Druck stehenden Wasser aus der Druckleitung 21 wieder gefüllt wird. Zu Beginn des nächsten Zyklus wird die Position des Einlass- und Auslassventils 292, 293 umgeschaltet.

Die Osmose ist ein langsamer Prozess, so dass je nach der konkreten Ausführung der Druckentlastungseinheit 2 die Bewegung der ersten Kolben 24a, 24b zu langsam für den direkten Antrieb des Schiffes sein könnte. Um dies zu beheben, ist es von Vorteil, wenn der zweite Kolben 281 einen kleineren Durchmesser als die zwei ersten Kolben aufweist, so dass eine gewisse Bewegung der ersten grösseren Kolben 24a, 24b eine schnellere Bewegung des zweiten kleineren Kolbens 281 bewirkt. Zusätzlich oder alternativ dazu könnten auch mehrere Osmosekammern mit einem Druck-Bewegungsumwandler verbunden werden, um diesen zu beschleunigen.

Der erfindungsgemässe Schiffsantrieb kann eine einzige oder mehrere Osmosekammern 1 umfassen. Jede Osmosekammer 1 kann relativ klein sein, mit einem Volumen von z.B. 100L, und es können mehrere Osmosekammern 1 durch Parallel- oder Reihenschaltung kombiniert werden, um den gewünschten Druck und Geschwindigkeit zu erhalten. Der Schiffsantrieb kann ebenfalls eine einzige oder mehrere Druckentlastungseinheiten 2 umfassen, wobei alle Druckentlastungseinheiten 2 mit einer einzigen Osmosekammer 1 verbunden sind, oder jede Druckentlastungseinheit 2 mit einer eigenen separaten Osmosekammer 1 verbunden ist, oder mehrere Osmosekammern 1 mit einem Druck-Bewegungsumwandler verbunden sind.

Die Entsalzungseinheit ist zur Trennung von Salz und Wasser geeignet, wodurch einerseits Salz oder zumindest Hochsalinitätswasser und andererseits Frischwasser oder zumindest Tiefsalinitätswasser gewonnen werden. Eine Salzwasserzuleitung 31 leitet das durch die Druckentlastungseinheit 2 verbrauchte Salzwasser an die Entsalzungseinheit. Zusätzlich oder alternativ dazu könnte auch Salzwasser direkt von der Umgebung (d.h. Meerwasser, wenn das Schiff auf dem Meer verkehrt) zur Entsalzungseinheit geführt werden. Die Entsalzung des Salzwassers in die Entsalzungseinheit erfolgt durch Destillation und/oder durch Elektrodialyse.

In der Ausführungsvariante der Entsalzungseinheit mit Destillation umfasst die Entsalzungseinheit eine Verdampfungskammer 32, eine Kondensationskammer und eine Heizung, die dem Salzwasser die für die Verdampfung erforderliche Wärmeenergie beibringt. Das Salzwasser wird durch die Heizung mit Solarenergie erhitzt, beispielsweise indem es direkt durch Warmwasser-Sonnenkollektoren geführt wird oder durch einen Wärmetauscher, in welchem Fall eine andere geeignete Wärmeträgerflüssigkeit durch Sonnenkollektoren geführt wird. Unterstützend kann die Heizung auch elektrisch sein und mit elektrischer Energie aus photovoltaischen Solarzellen oder aus Windturbinen betrieben werden. Typische Frachtschiffe und Tanker weisen Längen von mehreren Hundert Metern und Breiten von mehreren Dutzenden Metern auf, so dass beträchtliche Flächen für Sonnenkollektoren und Solarzellen zur Verfügung stehen. Windturbinen sind insbesondere dann von Vorteil, wenn das Wetter zu bewölkt ist, um genug Solarenergie zu erzeugen. Zur besseren Verdampfung des Salzwassers weist die Entsalzungseinheit in der Verdampfungskammer 32 ausserdem Vernebelungsdüsen 321 auf. Diese vernebeln das erhitzte Salzwasser in kleine Tröpfchen, wodurch die Kontaktfläche zwischen dem Salzwasser und der inneren Atmosphäre der Entsalzungseinheit vervielfacht und die Verdampfung des Salzwassers entsprechend begünstigt wird. Das verdampfte Wasser wird anschliessend von der Verdampfungskammer 32 zur Kondensationskammer geführt, in welcher es als Frischwasser kondensiert wird, während sämtliche nichtflüchtigen Elemente wie das Salz sich auf dem Boden der Verdampfungskammer 32 ansammeln. Dabei ist es von Vorteil, wenn die Innenwände der Verdampfungskammer 32 möglichst glatt sind und aus einem Material bestehen oder mit einem Material beschichtet sind, an welchem Salzkristalle wenig haften. Dies vermeidet eine übermässige Kristallbildung an den Innenwänden der Verdampfungskammer 32 und gewährleistet, dass das gesamte Salz auf den Boden der Verdampfungskammer 32 fällt und dort einfach gesammelt werden kann. Geeignete Materialien sind z.B PEEK (Polyetheretherketon) oder eine Hochleistungskeramik, die mit Titan beschichtet ist. Aus der Destillation des Salzwassers werden somit einerseits Salz und andererseits Frischwasser gewonnen. Besonders vorteilhaft ist es, wenn die Kondensationskammer als Wärmetauscher ausgebildet ist, in welchem die Wärmeenergie des eintretenden Wasserdampfes und des warmen kondensierten Frischwassers (sobald der Wasserdampf 100°C unterschritten hat) dem in die Entsalzungseinheit eintretenden Salzwasser übertragen wird. Die Ausbildung der Kondensationskammer als Wärmetauscher ermöglicht beträchtliche Energieeinsparungen, da die Energie zur Erhitzung des in die Entsalzungseinheit eintretenden Salzwassers grösstenteils vom aus der Entsalzungseinheit austretenden Wasser gewonnen wird. Das generierte Frischwasser wird anschliessend über eine Frischwasserleitung in den Tiefsalinitätsbereich 12 der Osmosekammer 1 geleitet, aus welchem es durch Osmose spontan wieder in den Hochsalinitätsbereich 11 fliesst.

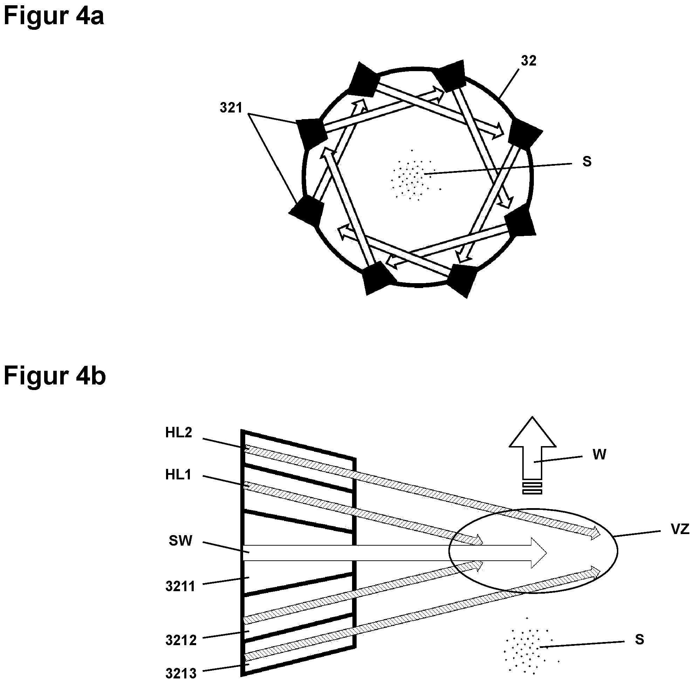

In einer vorteilhaften Ausführungsvariante ist die Verdampfungskammer 32 im Wesentlichen zylindrisch und umfasst mehrere Vernebelungsdüsen 321, die derart angeordnet sind, dass sie in der Verdampfungskammer 32 einen Wirbel erzeugen (Figur 4a). Beispielsweise können mehrere Vernebelungsdüsen 321 an den Innenwänden der Verdampfungskammer 32 angeordnet werden und in einem Winkel zwischen der radialen und der tangentialen Richtung ausgerichtet werden, beispielsweise 45° zur radialen Richtung. Durch den in der Verdampfungskammer 32 erzeugten Wirbel werden die fallenden Salzkristalle S im mittleren Bereich der Verdampfungskammer 32 begrenzt und sammeln sich nicht an ihren Innenwänden. Dadurch wird auch sichergestellt, dass die sich darin befindenden Atmosphäre und Tröpfchen ständig umgewälzt werden, was die Verdampfung des Salzwassers verbessert. Besonders vorteilhaft ist es ausserdem, wenn die Vernebelungsdüsen 321 einen mittleren Salzwasserkanal 3211 für Salzwasser SW, einen ersten konzentrischen Luftkanal 3212 für heisse Luft HL1 und einen zweiten konzentrischen Luftkanal 3213 für heisse Luft HL2 umfassen. Der mittlere Salzwasserkanal 3211 bildet die Längsmittelachse der Vernebelungsdüse 321 und ist durch den ersten konzentrischen Luftkanal 3212 umgeben, welcher selbst durch den zweiten konzentrischen Luftkanal 3212 umgeben ist. Die konzentrischen Luftkanäle 3212, 3213 sind kegelstumpfförmig und konvergieren zur Längsmittelachse der Vernebelungsdüse 321, so dass aus dem mittleren Salzwasserkanal 3211 austretendes Salzwasser SW auf der Vorderseite der Vernebelungsdüse 321 zuerst den aus dem ersten konzentrischen Luftkanal 3212 austretenden heissen Luftstrom HL1, und dann den aus dem zweiten konzentrischen Luftkanal 3212 austretenden heissen Luftstrom HL2 kreuzt. Das Salzwasser SW wird durch die heissen Luftströme HL1, HL2 in einer Vernebelungszelle VZ heisser Luft umschlossen, was eine rasche Verdampfung des Salzwassers SW kurz nach dessen Austritt aus der Vernebelungsdüse 321 und eine rasche Trennung von Wasser W und Salz Z gewährleistet. Eine besonders effiziente Verdampfung wird erreicht, wenn das Salzwasser SW vor oder im Salzwasserkanal 3211 auf eine Temperatur höher als 90°C erhitzt wird und die heisse Luft HL1, HL2 in den konzentrischen Luftkanälen 3211, 3212 auf Temperaturen höher als 108°C erhitzt werden, wobei die Temperatur der Luft im zweiten konzentrischen Luftkanal 3212 höher ist als jene im ersten konzentrischen Luftkanal 3211.

In einer besonderen Ausführungsvariante der Entsalzungseinheit mit Destillation wird der Dampfüberdruck, der in der Verdampfungskammer 32 durch die Verdampfung des Salzwassers entsteht, zusätzlich zur Stromenergiegewinnung ausgenutzt. Dafür ist mindestens eine Dampfturbine 6 vorgesehen, die beispielsweise zwischen der Verdampfungskammer 32 und der Kondensationskammer 33 angeordnet ist. Ergänzend könnte auch ein Teil des in die Verdampfungskammer 32 erzeugten Wasserdampfes direkt in die Kondensationskammer 33 gelangen und der übrige Teil des Dampfwassers könnte zur Dampfturbine 6 geführt werden und anschliessend in die Umgebung abgegeben werden.

In der Ausführungsvariante der Entsalzungseinheit mit Elektrodialyse weist die Entsalzungseinheit einen Elektrodialyse-Separator auf, der mit Solarenergie aus photovoltaischen Solarzellen betrieben wird. Der Elektrodialyse-Separator kann Salz und Wasser nicht vollständig trennen und erzeugt aus dem eintretenden Salzwasser also einerseits Hochsalinitätswasser und andererseits Tiefsalinitätswasser. Das generierte Tiefsalinitätswasser wird anschliessend über eine Frischwasserleitung in den Tiefsalinitätsbereich 12 der Osmosekammer 1 geleitet, aus welchem es durch Osmose spontan in den Hochsalinitätsbereich 11 übergeht. Die Entsalzungseinheit muss nicht unbedingt Frischwasser erzeugen, welches von Salzionen komplett befreit ist. Entscheidend für die Osmose ist lediglich, dass die Salinität des Tiefsalinitätswassers wesentlich tiefer ist als die Salinität des Wassers im Hochsalinitätsbereich 11. Versuche haben jedoch gezeigt, dass mit der Verwendung von Tiefsalinitätswasser die Gefahr der Verstopfung der osmotischen Membran durch Salzionen besteht. In der bevorzugten Ausführungsvariante der Entsalzungseinheit wird daher kein Elektrodialyse-Separator alleine benutzt, sondern dieser kann beispielsweise vor einer Verdampfungskammer 32 geschaltet werden und dient der vorgängigen Teiltrennung von Salz und Wasser.

Salzwasser wird aus der Umgebung (d.h. Meerwasser, wenn das Schiff auf dem Meer verkehrt) entnommen und gelangt in den Hochsalinitätsbereich 11 der Osmosekammer 1 durch eine Salzwasserzufuhr 14. Zur Steuerung des Schiffsantriebs ist die Salzwasserzufuhr 14 mit dem Hochsalinitätsbereich 11 steuerbar verbunden und kann mehr oder weniger geöffnet und geschlossen werden. Zur optimalen Vermischung des Salzwassers in der Osmosekammer 1 ist es von Vorteil, wenn Salzwasser auf mehreren Seiten der Osmosekammer 1 eingebracht wird, d.h. die Salzwasserzufuhr 14 kann mehrere Austritte an diversen Stellen der Osmosekammer 1 aufweisen. Von Vorteil ist es ausserdem, wenn zur Injektion des Salzwassers in den Hochsalinitätsbereich 11 eine Druckbeaufschlagungseinheit 4 vorgesehen ist, welche das Salzwasser aus der Umgebung ansaugt und unter denselben Druck setzt, welcher im Hochsalinitätsbereich 11 herrscht. Besonders vorteilhaft ist es, wenn die Druckbeaufschlagungseinheit 4 mit der Druckentlastungseinheit 2 mechanisch derart verbunden ist, dass ein Teil der Druckenergie des aus dem Hochsalinitätsbereich 11 austretenden Wassers für die Druckbeaufschlagung des in den Hochsalinitätsbereich 11 eintretenden Salzwassers wiederverwendet wird.

Die Bruttoleistung ***L**_{brutto}* der Druckentlastungseinheit 2 ist proportional zum Produkt zwischen dem Druck ***D*** und dem Volumenstrom ***V***₃ des aus dem Hochsalinitätsbereich 11 austretenden Wassers (***L**_{brutto}*∝***D**.**V**₃*). Von dieser Bruttoleistung ***L**_{brutto}* wird eine Druckbeaufschlagungsleistung ***L**_{DBA}* aufgebraucht, die proportional zum Produkt zwischen dem Druck ***D*** und dem Volumenstrom ***V***₁ des in den Hochsalinitätsbereich 11 injizierten Salzwassers (*L_{DBA}*∝*D.V*₁) ist. Die übrige, zum Antrieb des Schiffes zur Verfügung verbleibende Nettoleistung ***L**ₙₑₜₜₒ* der Druckentlastungseinheit 2 ist somit: ***L**ₙₑₜₜₒ*=***L**_{brutto}-**L**_{DBA},* d.h. *Lₙₑₜₜₒ*∝***D***(***V***₃*-**V***₁)*.* Der Volumenstrom ***V***₃ des aus dem Hochsalinitätsbereich 11 austretenden Wassers ist die Summe des Volumenstroms ***V***₁ des in den Hochsalinitätsbereich 11 injizierten Salzwassers und des Volumenstroms ***V***₂ des durch die osmotische Membran 13 spontan eindringenden Frischwassers des Tiefsalinitätsbereichs 12 (***V***₃=***V***₁**+*V***₂). Die Nettoleistung ***L**ₙₑₜₜₒ* der Druckentlastungseinheit 2 ist somit proportional zum Produkt zwischen dem Druck ***D*** und dem Volumenstrom ***V***₂ des durch die osmotische Membran 13 eindringenden Frischwassers: **L***ₙₑₜₜₒ* ∝ ***D***(***V***₃ - ***V***₁) ∝ ***D***.***V***₂.

Gemäss dem Osmoseprinzip sind sowohl der Druck ***D*** im Hochsalinitätsbereich 11 der Osmosekammer 1 und der Volumenstrom *V*₂ durch die osmotische Membran 13 steigende Funktionen des Unterschieds zwischen der Salinität des Wassers im Hochsalinitätsbereich 11 und der Salinität des Wassers im Tiefsalinitätsbereich 12. Für eine optimale Leistung der Druckentlastungseinheit 2 sollte die Salinität des Wassers im Hochsalinitätsbereich 11 also so hoch wie möglich sein und die Salinität des Wassers im Tiefsalinitätsbereich 12 so niedrig wie möglich sein. Wenn aus der Entsalzungseinheit Frischwasser (Salinität Null) in den Tiefsalinitätsbereich 12 der Osmosekammer 1 gelangt, kann die Salinität des Frischwassers nicht weiter reduziert werden. Die Salinität des Wassers im Hochsalinitätsbereich 11 kann aber erhöht werden, im Extremfall bis zur Sättigung. In einer vorteilhaften Ausführungsvariante der Erfindung wird die Salinität des in den Hochsalinitätsbereich 11 injizierten Salzwassers mit dem Salz bzw. Hochsalinitätswasser, der bzw. das durch die Entsalzungseinheit generiert wird, zusätzlich erhöht. Dafür ist eine Salzwiederverwendungseinheit vorgesehen, welche das Salz aus der Verdampfungskammer 32 bzw. das Hochsalinitätswasser aus dem Elektrodialyse-Separator sammelt und über eine Salzzufuhr 51 zu einem Salzmischer 52 befördert. Der Salzmischer 52 ist zur Beimischung des Salzes bzw. Hochsalinitätswassers ins Wasser, welches sich entweder bereits im Hochsalinitätsbereich 11 der Osmosekammer 1 befindet, oder in den Hochsalinitätsbereich 11 injiziert wird, geeignet (Figur 2a). Der Salzmischer 52 kann beispielsweise auch in der Salzwasserzufuhr 14 angeordnet werden. Von Vorteil ist es, wenn Salz in Form von übersättigtem Salzwasser, d.h. Salzwasser mit feste Salzkristallen, eingeführt wird.

Gemäss vorliegender Erfindung wird die Antriebskraft des Schiffes durch die Osmosekammer produziert, welche als Treibstoffe einerseits Salz oder Hochsalinitätswasser und andererseits Frischwasser oder Tiefsalinitätswasser verbraucht. Der Vorrat an Salz oder Hochsalinitätswasser und an Frischwasser oder Tiefsalinitätswasser wird mit Solarenergie aus der Umgebung stets erneuert. Dies setzt jedoch sonnige Zeiten voraus. Für den Start des Schiffes und für lange Zeiträume ohne Sonne (z.B. Nachtbetrieb) ist es daher von Vorteil, wenn eine ergänzende Energiequelle vorhanden ist. Besonders vorteilhaft ist es, wenn der erfindungsgemässe Schiffsantrieb auch einen Wasserstoffantrieb umfasst, der eine Antriebskraft aus Wasserstoff erzeugen kann. Der dafür benötigte Wasserstoff wird in einem Wasserstofftank aufbewahrt. Bevorzugt ist es, wenn auch ein Wasserstoffgenerator vorhanden ist, mit welchem Wasserstoff durch Elektrolyse von Wasser produziert werden kann. Der Wasserstoff kann während der sonnigen Zeiten mit Solarenergie aus photovoltaischen Solarzellen erzeugt werden und in den Wasserstofftank für einen späteren Verbrauch aufbewahrt werden.

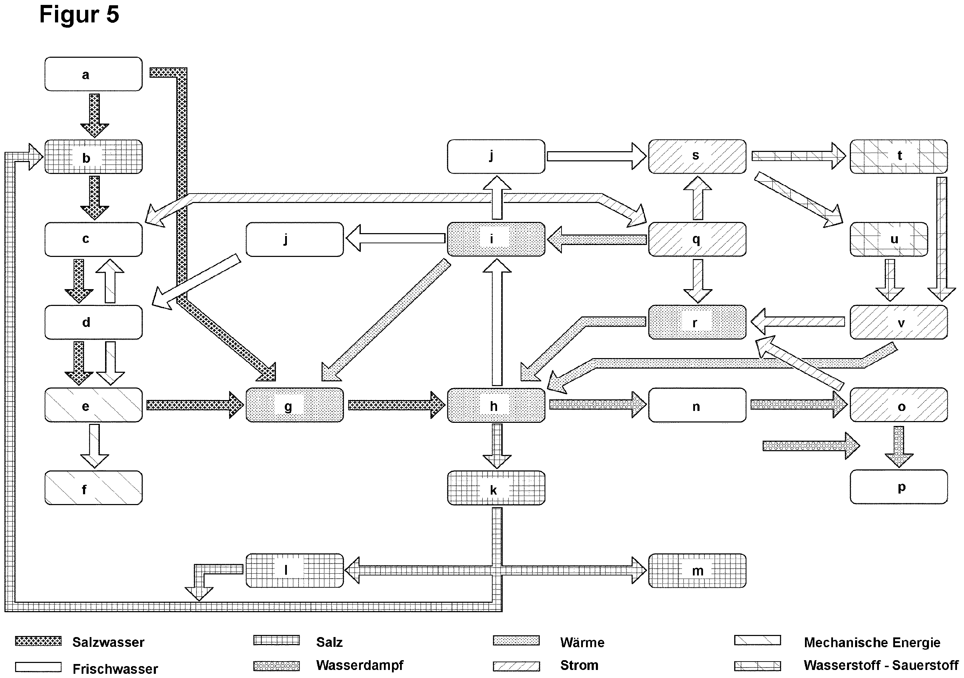

Die Figur 5 fasst die wichtigsten Merkmale des beschriebenen Schiffsantriebs zusammen:
a) Eintritt von Meerwasser, z.B. durch Ausnutzung der Wasserverdrängung des Schiffs;
b) Optionale Beimischung von Salz zum eintretenden Meerwasser;
c) Druckbeaufschlagung für den Einschuss in den Hochsalinitätsbereich 11 der Osmosekammer 1;
d) Osmose in der Osmosekammer;
e) Umwandlung des Wasserdrucks in Bewegung durch den Druck-Bewegungsumwandler 2;
f) Schiffsantrieb;
g) Erhitzung des Salzwassers durch die Heizung (vorzugsweise Wärmetauscher);
h) Verdampfung des Salzwassers in die Verdampfungskammer 32;
i) Kühlung und Kondensation des Wasserdampfs in der Kondensationskammer;
j) Sammlung von Frischwasser und Einfuhr des Frischwassers in den Tiefsalinitätsbereich 12 der Osmosekammer 1;
k) Salzgewinnung;
l) Salzlager;
m) Salzüberschuss geht zurück ins Meer;
n) Leitung des Dampfüberdrucks der Verdampfungskammer 32 zur Dampfturbine;
o) Erzeugung von elektrischer Energie durch die Dampfturbine;
p) Ausstoss von Dampf durch einen Kamin;
q) Erzeugung von elektrischer Energie durch Sonnenzellen oder Windturbinen oder Wärmegewinnung durch Sonnenkollektoren;
r) Heizung;
s) Stromüberschüsse der Sonnenzellen oder Windturbinen werden zur Elektrolyse von Frischwasser verwendet;
t) Erzeugung von Sauerstoff durch die Elektrolyse des Frischwassers;
u) Erzeugung von Wasserstoff durch die Elektrolyse des Frischwassers;
v) Brennstoffzelle zur Erzeugung von Strom, zum Ausgleich einer Stromunterversorgung.

## Patentansprüche

1. Umweltfreundlicher Schiffsantrieb umfassend eine Osmosekammer (1), eine Druckentlastungseinheit (2) und eine Entsalzungseinheit, wobei
die Osmosekammer (1) einen Hochsalinitätsbereich (11) und einen Tiefsalinitätsbereich (12) umfasst, die durch eine osmotische Membran (13) voneinander getrennt sind,
die Druckentlastungseinheit (2) mindestens einen Druck-Bewegungsumwandler aufweist, welcher über eine Hochdruckleitung (21) mit dem Hochsalinitätsbereich (11) der Osmosekammer (1) verbunden ist,
die Entsalzungseinheit aus Salzwasser zur Erzeugung von einerseits Salz oder zumindest Hochsalinitätswasser und andererseits von Frischwasser oder zumindest Tiefsalinitätswasser geeignet ist,
eine Frischwasserleitung die Entsalzungseinheit mit dem Tiefsalinitätsbereich (12) der Osmosekammer (1) verbindet und
eine Salzwasserzufuhr (14) mit dem Hochsalinitätsbereich (11) der Osmosekammer (1) steuerbar verbunden ist.

2. Umweltfreundlicher Schiffsantrieb gemäss Anspruch 1,
**dadurch gekennzeichnet, dass**
die osmotische Membran (13) auf der Seite des Tiefsalinitätsbereichs (12) mit einer porösen Keramik (15) versehen ist, die durchgehende Kapillarkanäle (153) aufweist.

3. Umweltfreundlicher Schiffsantrieb gemäss Anspruch 2,
**dadurch gekennzeichnet, dass**
die poröse Keramik (15) in Form von Röhren vorliegt, welche mit der osmotischen Membran (13) beschichtet sind, und die Osmosekammer (1) in Form eines Tanks vorliegt, den die Keramikröhren durchlaufen,
wobei der Tank den Hochsalinitätsbereich (11) bildet und das innere Volumen der Keramikröhren den Tiefsalinitätsbereich (12) bildet.

4. Umweltfreundlicher Schiffsantrieb gemäss Anspruch 2,
**dadurch gekennzeichnet, dass**
die Druckentlastungseinheit (2) zwei Zylinder (23a, 23b) mit jeweils einem ersten Kolben (24a, 24b) umfasst, die entlang der gleichen Längsachse angeordnet sind, wobei:
- die zwei ersten Kolben (24a, 24b) derart miteinander verbunden sind, dass sie zusammen bewegbar sind und immer den gleichen Abstand aufweisen,
- der dem anderen Zylinder (23a, 23b) zugewandte Bereich jedes Zylinders (23a, 23b) eine Vorderkammer (25a, 25b) bildet, die durch den ersten Kolben (24a, 24b), die lateralen Wände des Zylinders (23a, 23b) und eine unverrückbare Stirnwand (26) des Zylinders (23a, 23b) begrenzt ist,
- auf der anderen Seite jedes Zylinders (23a, 23b) sich eine Hinterkammer (27a, 27b) befindet, die durch den ersten Kolben (24a, 24b), laterale Wände und eine Stirnfläche eines zweiten Kolbens (281) begrenzt ist,
- der zweite Kolben (281) durch eine Pleuelstange (282) mit einer Kurbelwelle (283) verbunden ist, die zum Antrieb des Schiffs dient,
- die Hinterkammern (27a, 27b) von den Vorderkammern (25a, 25b) räumlich getrennt sind, zur Vermeidung jeglicher Vermischung der sich darin befindenden Flüssigkeiten.

5. Umweltfreundlicher Schiffsantrieb gemäss Anspruch 1,
**dadurch gekennzeichnet, dass**
die Entsalzungseinheit eine Verdampfungskammer (32) umfasst, die im Wesentlichen zylindrisch ist und mehrere Vernebelungsdüsen (321) umfasst,
wobei die Vernebelungsdüsen (321) derart angeordnet sind, dass durch diese in der Verdampfungskammer (32) einen Wirbel erzeugbar ist.

6. Umweltfreundlicher Schiffsantrieb gemäss Anspruch 1,
**dadurch gekennzeichnet, dass**
die Entsalzungseinheit eine Verdampfungskammer (32) mit mehreren Vernebelungsdüsen (321) umfasst,
wobei eine Vernebelungsdüse (321) einen mittleren Salzwasserkanal (3211) für Salzwasser (SW), einen ersten konzentrischen Luftkanal (3212) für heisse Luft (HL1) und einen zweiten konzentrischen Luftkanal (3213) für heisse Luft (HL2) umfasst,
wobei der mittlere Salzwasserkanal (3211) die Längsmittelachse der Vernebelungsdüse (321) bildet und durch den ersten konzentrischen Luftkanal (3212) umgeben ist, welcher selbst durch den zweiten konzentrischen Luftkanal (3212) umgeben ist,
und wobei die konzentrischen Luftkanäle (3212, 3213) kegelstumpfförmig sind und zur Längsmittelachse der Vernebelungsdüse (321) konvergieren.

7. Umweltfreundlicher Schiffsantrieb gemäss Anspruch 1,
**dadurch gekennzeichnet, dass**
die Entsalzungseinheit eine Verdampfungskammer (32), eine Kondensationskammer und eine Heizung umfasst,
wobei die Kondensationskammer als Wärmetauscher ausgebildet ist und zur Übertragung der Wärmeenergie des eintretenden Wasserdampfes und des warmen kondensierten Frischwassers auf das in die Entsalzungseinheit eintretenden Salzwasser geeignet ist.

8. Verfahren zum Antrieb eines Schiffes mit einer Osmosekammer (1) umfassend einen Hochsalinitätsbereich (11) und einen Tiefsalinitätsbereich (12), die durch eine osmotische Membran (13) voneinander getrennt sind, **gekennzeichnet durch** die folgenden Verfahrensschritte:
- Ansaugen von Salzwasser aus der Umgebung und Einführung in den Hochsalinitätsbereich (11);
- Druckerhöhung im Hochsalinitätsbereich (11) aufgrund der Osmose durch die osmotische Membran (13);
- Gewinnung von Energie für den Antrieb des Schiffes durch die Entlastung des im Hochsalinitätsbereich (11) herrschenden Drucks;
- Erzeugung von Tiefsalinitätswasser durch Entsalzung von Salzwasser;
- Einführung des Tiefsalinitätswassers in den Tiefsalinitätsbereich (12).

9. Verfahren gemäss Anspruch 8,
wobei Tiefsalinitätswasser durch Entsalzung des aus dem Hochsalinitätsbereich (11) austretenden Salzwasser erzeugt wird.

10. Verfahren gemäss Anspruch 8,
wobei Salz oder Hochsalinitätswasser durch Entsalzung von Salzwasser erzeugt wird, der oder das dem in den Hochsalinitätsbereich (11) eintretenden Salzwasser beigemischt wird.
